# EUROPÄISCHE PATENTSCHRIFT

(11) **EP 2 619 050 B1**
(45) Veröffentlichungstag und Bekanntmachung des Hinweises auf die Patenterteilung: **31.05.2017**
(21) Anmeldenummer: 11757273.5
(22) Anmeldetag: 12.09.2011
(51) Int. Cl.: B60T 7/12

(54) **STEUERVENTIL MIT UMSTELLMITTELN ZUR UMSCHALTUNG ZWISCHEN BREMSDRUCKKENNLINIEN**
CONTROL VALVE COMPRISING SWITCHING MEANS FOR SWITCHING BETWEEN CHARACTERISTIC CURVES OF BRAKE PRESSURE
SOUPAPE DE COMMANDE DOTÉE DE MOYENS DE CHANGEMENT POUR UNE COMMUTATION ENTRE DES COURBES CARACTÉRISTIQUES DE PRESSION DE FREINAGE

(30) Priorität: 20.09.2010 EA 201001381
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); HELLER, Martin, 85716 Unterschleißheim (DE); KRUSCHE, Michael, 80802 München (DE); KRYLOV, Vladimir, Moskau 127322 (RU); ROMANOV, Sergey, Moskau 111558 (RU); SIMON, Timm, 80636 München (DE)
(74) Vertreter: Schönmann, Kurt
(86) Internationale Anmeldenummer: PCT/EP2011/065733
(87) Internationale Veröffentlichungsnummer: WO 2012/038286

(56) Entgegenhaltungen:
- DE-A1- 2 526 622
- DE-A1- 4 309 386
- DE-B- 1 168 946
- DE-B- 1 199 309
- DE-B- 1 206 942
- DE-B3-102006 025 329
- DE-C- 702 771
- DE-C1- 10 144 300
- GB-A- 2 193 277
- US-A- 4 163 587
- US-A1- 2002 163 248
- Asadtschenko V. R.: "AVTOMATITSCHESKIJE TORMOSA PODVISHNOGO SOSTAWA SHELEZNOGO TRANSPORTA", 2002, Moskau, Russ., XP002669823, Seiten 71-128, das ganze Dokument

## Beschreibung

Die vorliegende Erfindung betrifft ein Steuerventil für selbsttätige Druckluftbremsen zur Bildung eines Bremszylinderdruckes nach Maßgabe einer Druckdifferenz zwischen einem Druck in der durchgehenden Hauptluftleitung eines Zuges und einem gespeicherten Referenzdruck, der vom Druck in der Hauptluftleitung abgeleitet ist.

Das Einsatzgebiet der vorliegenden Erfindung ist der Schienenfahrzeugbau. Schienenfahrzeuge haben meist eine selbsttätige automatische Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von den Steuerventilen ausgeführt.

Daneben haben Steuerventile weitere Funktionen, die mit der Füllung, dem Abschluss und der Entlüftung von Volumen mit gespeicherter Druckluft, mit der Einstellung bestimmter statischer Kennlinien des Bremszylinderdruckes und mit der Beschleunigung der Übertragung von als Druckhöhe kodierten Signalen in der Hauptluftleitung zusammenhängen. Schließlich kommen Funktionen hinzu, die auch bei schneller und starker Änderung des Druckes in der Hauptluftleitung eine nur allmähliche Änderung des Druckes in den Bremszylindern sichern, um den auftretenden Ruck an den Fahrzeugen und die Längskräfte innerhalb des Zuges zu begrenzen.

Aus dem Fachbuch Asadtschenko, V.R.: Avtomatitscheskije Tormosa podvishnogo Sostawa sheleznogo Transporta (russ.), Moskau 2002, Seite 71 ff geht das allgemeine Prinzip eines Steuerventils der hier interessierenden Art hervor. Das Steuerventil ist gewöhnlich an einem Ventilträger angebracht und die notwendigen Druckluftverbindungen werden mit den betreffenden Anschlüssen am Ventilträger hergestellt. Innerhalb des Trägers befinden sich Kammern für den Steuerdruck S und den Referenzdruck A. Das Steuerventil besteht aus einem Hauptteil und einem Leitungsteil. Die Erzeugung des Bremszylinderdruckes obliegt dem Hauptteil, während das Leitungsteil einen Steuerdruck S erzeugt, der das Hauptteil steuert.

Im Hauptteil wirkt ein Referenzdruck, welcher unter anderem den gespeicherten Regelbetriebsdruck in der Hauptluftleitung abbildet. Wesentliche Bestandteile des Hauptteils sind der Steuerkolben, die auf diesen wirkende Druckfeder, ein integriertes Doppelsitzventil zum Be- oder Entlüften des angeschlossenen Bremszylinders sowie ein Ausgleichskolben, der vom Bremszylinderdruck gegen die Kraft zweier einstellbarer Druckfedern bewegt wird.

Beim Bremsen wird der Druck in der Hauptluftleitung abgesenkt. Dementsprechend sinkt auch der am Steuerkolben anstehende Steuerdruck S, während der gegenüberliegende Referenzdruck A im Wesentlichen unverändert bleibt. Die resultierende Bewegung des Steuerkolben gegen die Druckfeder führt zu einem Öffnen des Einlassventils. Dabei strömt Druckluft aus einem Reservoir über Querbohrungen der hohl gebohrten Kolbenstange des Steuerkolbens zum Einlassventil und über dieses zum Bremszylinder.

Der sich einstellende Bremszylinderdruck wird dadurch bestimmt, dass der Ausgleichskolben unter der Wirkung des entstehenden Bremszylinderdruckes in gleicher Richtung ausweicht, bis das Einlassventil wieder schließt. Wann dies erfolgt, hängt von den Druckfedern am Ausgleichskolben ab. Diese können verschieden stark vorgespannt werden, um das Steuerventil an leer, mittlere und beladene Fahrzeuge nach Maßgabe verschiedener Bremsdruckkennlinien anzupassen. Hierfür ist eine der auf den Ausgleichskolben wirkenden Druckfedern über mechanische Umstellmittel vorspannbar.

Die mechanischen Umstellmittel zur Umschaltung der Bremsdruckkennlinien befinden sich innerhalb des Trägers. Ein hier angeordneter drehbarer Stellnocken wirkt auf das eine Ende des teilweise in eine Kammer des Trägers hineinragenden Hauptteils des Steuerventils ein, um die auf den Ausgleichskolben wirkende Druckfeder vorzuspannen. Die Vorspannung kann dabei dreistufig erfolgen, um Bremsdruckkennlinien für den Fahrzeugzustand "leer", "mittel" und "beladen" einzustellen. Diese Bremsdruckkennlinieneinstellung am Steuerventil erfolgt unabhängig vom Träger. Da der Abstand der Flanschfläche zwischen Träger und Hauptteil des Steuerventils einerseits und dem Stellnocken andererseits sich direkt auf die Höhe des Bremsdrucks auswirkt, kommt es je nach Toleranzlage oder Verschleiß der Umstellmittel im Träger zu einer recht großen Streuung der Bremszylinderdrücke. Weiterhin nachteilhaft ist, dass die Umstellmittel als Bestandteil des Trägers nicht regelmäßig gewartet werden. Dies führt im Lauf der Zeit durch Verschmutzung und Korrosion zu einer schwergängigen Schaltwelle. Ferner kann das Steuerventil nicht umgestellt werden, wenn es an einer Variante des Trägers ohne Umstellmittel angeflanscht ist und dies reduziert die Einsatzmöglichkeiten des Steuerventils.

Es ist daher die Aufgabe der vorliegenden Erfindung, ein Steuerventil mit Umstellmitteln zur Umschaltung zwischen verschiedenen Bremsdruckkennlinien zu schaffen, welches sich über die Lebenszeit genau und zuverlässig unabhängig vom Träger verwenden lässt.

Die Aufgabe wird ausgehend von einem Steuerventil gemäß dem Oberbegriff von Anspruch 1 in Verbindung mit dessen kennzeichnendem Merkmal gelöst. Die nachfolgenden abhängigen Ansprüche geben vorteilhafte Weiterbildungen der Erfindung wieder.

Die Erfindung schließt die technische Lehre ein, dass die Umstellmittel eine im Gehäuse des Hauptteils drehend gelagerte untergebrachte Schaltwelle umfassen, die über mindestens einen Stellnocken die Vorspannung der Druckfeder des Ausgleichskolbens ändert.

Der Vorteil der erfindungsgemäßen Lösung liegt insbesondere darin, dass wegen der Anordnung der Umstellmittel außerhalb des Trägers die toleranzbehaftete Flanschverbindung keinen Einfluss mehr auf die Umstellung hat, so dass sich verschiedene Bremszylinderdrücke präzise einstellen lassen. Da die Umstellmittel erfindungsgemäß integraler Bestandteil des Hauptteils des Steuerventils sind, können diese mit dem Hauptteil im Zuge der Wartung des Hauptteils in einfacher Weise mit überprüft und ggf. überarbeitet werden. Die erfindungsgemäße Lösung schafft damit eine Unabhängigkeit der Umstellmöglichkeit vom Träger des Hauptteils, so dass das Hauptteil auch an einem Träger ohne Umstellmittel verbaut werden kann.

Gemäß einer bevorzugten Ausführungsform der Erfindung ist der Stellnocken bodenseitig außen an einem topfartigen Einsatz angeordnet, in welchem die Druckfeder zumindest teilweise untergebracht ist. Der topfartige Einsatz dient damit einer präzisen Führung der Druckfeder, so dass unterschiedliche Schaltstellungen der Umstellmittel nicht zu einer nachteiligen Radialverschiebung der Druckfeder führen können. Der topfartige Einsatz selbst sollte in einer korrespondierenden Ausnehmung des Gehäuses, vorzugsweise eines Gehäusedeckels eingesetzt sein. Der Gehäusedeckel dient insoweit gleichzeitig dem Verschluss des Gehäuses des Hauptteils, worüber die integrierten Ventilmittel zugänglich sind.

Erfindungsgemäß ist das Steuerventil geteilt, nämlich bestehend aus einem Hauptteil und einem Leitungsteil, aufgebaut und es wird vorgeschlagen, beide Teile lösbar an einem gemeinsamen Träger zu befestigen, welcher daneben auch Kammern und/oder Kanäle zur Druckluftführung enthält. Hierdurch können außenliegende Verrohrungen vermieden werden und das Hauptteil oder das Leitungsteil lassen sich vorzugsweise über eine Flanschverbindung einfach und schnell montieren oder demontieren. Hierfür wird vorgeschlagen, dass das Hauptteil bzw. Leitungsteil am Gehäuse eine seitliche Flanschfläche aufweist.

Vorzugsweise ist zum Be- und Entlüften des am Steuerventil angeschlossenen Bremszylinders im Gehäuse ein Doppelsitzventil vorgesehen, bei dem durch Annäherung des Steuerkolbens über eine Kolbenstange ein Einlassventil und durch Entfernung derselben ein Auslassventil öffnet. Das Einlassventil liegt dabei in einem Luftweg von einem Vorratsluftbehälter in Richtung des Bremszylinders. Das Auslassventil liegt dagegen in einem Luftweg vom Bremszylinder zur Umgebung und dient damit der Entlüftung. Durch dieses Doppelsitzventil lässt sich die Be- und Entlüftung des Bremszylinders platzsparend innerhalb des Hauptteils des Steuerventils anordnen.

Gemäß eines weiteren Aspekts der Erfindung wird vorgeschlagen, dass das Doppelsitzventil mit dem Steuerkolben und dem Ausgleichskolben und dessen Druckfeder eine gemeinsame Achse bilden, welche parallel beabstandet zur seitlichen Flanschfläche verläuft. Hierdurch lässt sich erreichen, dass die gemeinsame Achse in der montierten Position des Hauptteils am Träger vorzugsweise vertikal verläuft und damit eine gute Zugänglichkeit der Verstellmittel gewährleistet.

Um die Zugänglichkeit der Umstellmittel weiter zu verbessern, wird vorgeschlagen, dass diese in der montierten Position des Hauptteils am Träger unterhalb des Doppelsitzventils angeordnet sind.

Die Umstellmittel wirken auf vorzugsweise zumindest zwei Druckfedern ein, von denen eine Druckfeder eine progressive Kennlinie aufweisen kann, um eine hierzu analoge Bremsdruckcharakteristik zu erzeugen. In einer bevorzugten Ausführungsform ist die für die Stellung "beladen" vorgesehene Druckfeder mit Spiel im Gehäuse eingebaut, was eine geknickte Charakteristik erzeugt. Mehrere Druckfedern sind generell koaxial zueinander angeordnet und weisen unterschiedliche Durchmesser auf. Die Druckfedern sind zueinander parallel geschaltet und können zwischen dem Ausgleichskolben und dem Gehäuse und können zumindest teilweise über die erfindungsgemäßen Umstellmittel vorgespannt werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen schematischen Längsschnitt durch ein Steuerventil, umfassend ein Hauptteil und ein Leitungsteil, und
- Fig. 2: einen schematischen Längsschnitt durch das Hauptteil des Steuerventils gemäß Fig. 1.

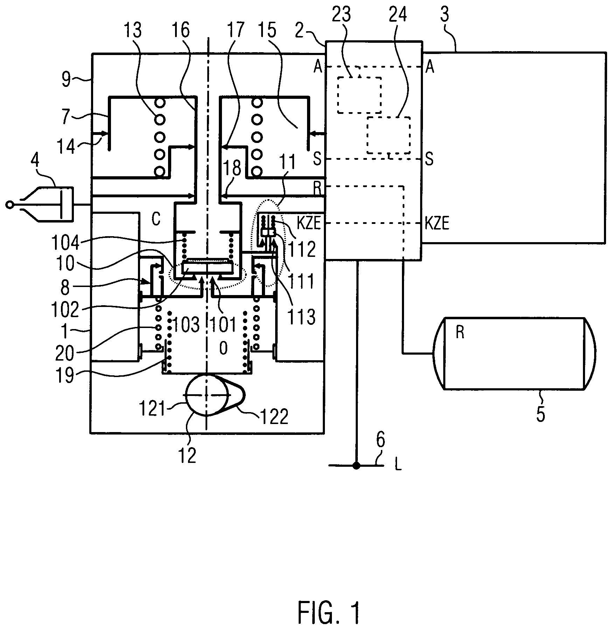

Gemäß Fig. 1 besteht ein Steuerventil aus einem Hauptteil 1, einem Träger 2 und einem Leitungsteil 3. Es ist an einem hier nicht dargestellten Schienenfahrzeug montiert. Am Träger 2 sind Verbindungen zu einem Bremszylinder 4, einem Vorratsluftbehälter 5 und einer Hauptluftleitung 6 angeschlossen.

Der Träger 2 enthält ein Volumen für einen Steuerdruck S und einen Referenzdruck A. Die Volumen können auch durch an den Träger 2 angeschlossene Vorratsluftbehälter 5 dargestellt werden. Weiter enthält der Träger 2 Verbindungen für den Druck R aus dem Vorratsluftbehälter 5 und einen Kanal der zusätzlichen Entlüftung KZE, welcher sowohl im Haupt- als auch im Leitungsteil 1; 2 benötigt wird.

An einer beliebigen Stelle des Steuerventils befinden sich ein nicht dargestelltes Rückschlagventil zur Füllung des Vorratsluftbehälters 5 aus der Hauptluftleitung 6, sowie ein Ventil zur manuellen Entlüftung des Referenzdruckes A.

Das Leitungsteil 3 dient dazu, mit nicht näher dargestellten Mitteln aus dem Druck der Hauptluftleitung 6 den Steuerdruck S und den Referenzdruck A abzuleiten, welche an das Hauptteil 1 weitergeleitet werden. Weiterhin steuert das Leitungsteil 3 bei Beginn einer Bremsung eine Verbindung von der Hauptluftleitung 6 zum Kanal der Zusätzlichen Entlüftung KZE.

Das Hauptteil 1 beinhaltet in einem Gehäuse 9 einen Steuerkolben 7, einen Ausgleichskolben 8, ein Doppelsitzventil 10, ein Ventil 11 für den Abschluss des Kanals KZE und eine Verstelleinrichtung 12 für die Einstellung der Laststellung des Steuerventils sowie weitere Elemente wie Druckfedern, Siebe (Filter) und Dichtungen.

Das Doppelsitzventil 10 besteht aus einen Auslassventil 101, einem Ventilkörper 102, einem Einlassventil 103 und einer Druckfeder 104.

Der Steuerkolben 7 ist durch die gegenüberliegenden Drücke A und S belastet, auf der Seite des S-Druckes wirkt eine Druckfeder 13. Der Steuerkolben 7 weist eine Dichtung 14 auf, welche beide Drücke trennt. Die Dichtwirkung kann durch einen Dichtring, ebenso aber auch durch eine Membrane hergestellt werden. Ist die Dichtung 14 ein Dichtring, kann sich dieser im Gehäuse 9 befinden und auf dem Steuerkolben 7 gleiten und dichten. In der Nähe der Dichtung 14 befindet sich eine Düse 15, welche in einer Endstellung des Steuerkolbens 7 eine Verbindung der Drücke A und S darstellt. Der Steuerkolben 7 besitzt weiter eine Kolbenstange 16, die zwischen zwei Dichtungen 17 und 18 eine Zuführung des Druckes R ins Innere der Kolbenstange 16 aufweist.

Am Ende der Kolbenstange 16 befindet sich ein Doppelsitzventil 10, welches den Druck aus dem Vorratsluftbehälter 5 in den Bremszylinder 4 - Bremsdruck C - einlässt oder aus diesem in die Umgebung 0 auslässt.

Der Ausgleichskolben 8 wird durch den Bremsdruck C aus dem Bremszylinder 4 belastet; ihm gegenüber steht der Umgebungsdruck 0. Auf der Seite des Umgebungsdruckes 0 befindet sich eine oder mehrere Druckfedern 19, 20. Mindestens eine der Druckfedern kann durch Umstellmittel 12 in Richtung des Ausgleichskolbens 8 verstellt werden.

Um drei Laststellungen präzise steuern zu können, können auch drei Druckfedern verwendet werden, ersatzweise können Druckfedern mit nichtlinearer Kennlinie verwendet werden. Das Ventil 11 für den Abschluss des Kanals KZE besteht aus einem Ventilkörper 111, einer Druckfeder 112 und einem Ventilsitz 113. Der Ventilkörper 111 und die Kolbenstange 16 besitzen Geometrien, welche nahe einer oberen Endstellung in Eingriff kommen und das Ventil gegen die Druckfeder 112 öffnen, so dass eine Verbindung vom Kanal der zusätzlichen Entlüftung KZE zu einem Raum entsteht, welcher mit dem Bremszylinder 4 in Verbindung steht und somit den Bremszylinderdruck C enthält.

Die Wirkungsweise der Anordnung beim Bremsen des Schienenfahrzeuges ist folgende: Zum Bremsen wird durch den Lokführer oder andere Mittel der Druck in der Hauptluftleitung 6, ausgehend von einem Regelbetriebsdruck, abgesenkt. Diese Absenkung wird durch das Leitungsteil 3 auf den Steuerdruck S übertragen, der Referenzdruck A bleibt zunächst unverändert. Ist die Drucksenkung ausreichend schnell und stark, um die Wirkung des Drucksausgleich über die Düse 15 sowie die Anfangskraft der Druckfeder 13 zu überwinden, kommt es zu einer Bewegung des Steuerkolbens 7 in Richtung des Ausgleichskolbens 8. Diese Bewegung ist gerade so groß, dass ein Gleichgewicht von Druck- und Federkräften am Steuerkolben 7 wieder hergestellt wird.

Durch die Annäherung der Kolben kommt es zu einer Berührung des Auslassventils 101 mit dem Ventilkörper 102 des Doppelsitzventils 10. Bei einer weiteren Bewegung in diese Richtung hebt der Ventilkörper 102 vom Einlassventil 103 ab, so dass Druckluft aus dem Vorratsluftbehälter 5 über die hohle Kolbenstange des Steuerkolbens 7 zum Bremszylinder strömen kann.

Eine weitere Funktion des Leitungsteils 3 besteht darin, bei Beginn einer Bremsung eine Verbindung von der Hauptluftleitung 6 zum Kanal der zusätzlichen Entlüftung KZE zu öffnen. Dadurch strömt Druckluft aus der Hauptluftleitung 6 ebenfalls zum Bremszylinder 4, solange das Auslassventil 102 noch geöffnet ist, gleichzeitig auch in die Umgebung 0. Nach einer durch die Geometrie des Ventilkörpers 111 im Ventil für den Abschluss des Kanals KZE bestimmten Weg des Steuerkolbens 7 bei Beginn der Bremsung verschließt der Ventilkörper den Ventilsitz 113. Damit ist das Ausströmen von Druckluft aus der Hauptluftleitung 6 bei Bremsbeginn auf diesem Weg unterbrochen, wobei sich eine genau vorgesehene Druckdifferenz A-S, somit auch ein vorbestimmter anfänglicher Bremsdruck C eingestellt hat. Diese Funktion dient der Beschleunigung der Fortpflanzung der Druckabsenkung in der Hauptluftleitung 6 auf der Zuglänge und sichert ein schnelles und richtig dosiertes erstes Anlegen der Bremse.

Der sich aufbauende Bremsdruck C übt eine Kraft auf den Ausgleichskolben 8 aus, der sich bis zur Erreichung eines Kräftegleichgewichts mit der Kraft der Druckfedern 19, 20 bewegt. Somit entspricht jede Bremsstufe, durch den Wert der Absenkung des Druckes L gesteuert, einem bestimmten Weg des Steuerkolbens. Sobald der vorbestimmte Bremsdruck C erreicht ist, hat auch der Ausgleichskolben 8 eine entsprechende Bewegung ausgeführt - nach welcher sowohl Ein- als auch Auslassventil 101; 103 geschlossen sind (Abschlussstellung).

Die Umstellmittel 12 für die Einstellung der Laststellung des Steuerventils bestehen aus einer Schaltwelle 121, welche ein Stellnocken 122 trägt. Die Schaltwelle 121kann von einer Seite des Steuerventils durch einen Bediensteten der Eisenbahn gedreht werden, um das Steuerventil an die aktuelle Beladung des Wagens anzupassen. Dabei wird der Stellnocken 122 an einen Anschlag für die Druckfeder 19 angenähert oder von dieser entfernt. Dies hat zur Folge, dass bei gleichem Weg des Ausgleichskolbens 8 durch die Druckfeder 19 eine größere oder eine kleinere Kraft ausgeübt wird. Insbesondere kann die Druckfeder 19 in der entfernten Position "leer" einen Abstand zum Ausgleichskolben 8 aufweisen, der auf dem ganzen möglichen Arbeitshub das Entstehen einer Federkraft verhindert.

Wie bereits beschrieben, entspricht der Bremsdruck C infolge des Kräftegleichgewichtes am Ausgleichskolben 8 der auf die Kolbenfläche bezogenen Kraft der Druckfedern 19, 20. Somit kann eine hohe Federkraft zur Erzielung eines hohen Bremsdruckes C für ein beladenes Fahrzeug eingestellt werden, für ein leeres oder teilbeladenes Fahrzeug wird durch entgegengesetzte Verstellung des Stellnockens 122 eine geringere Federkraft für einen niedrigeren Bremsdruck C erzielt.

Eine vorteilhafte Ausführung ergibt sich für das teilbeladene Fahrzeug insbesondere dann, wenn die Druckfeder eine progressive Kennlinie hat, oder wenn eine - nicht dargestellte - dritte Druckfeder speziell für die Stellung "teilbeladen" durch das exzentrische Element spielfrei zum Ausgleichskolben eingerückt wird, wobei eine weitere Druckfeder für die Stellung "beladen" noch Spiel hat.

Für die Stellung "beladen" kann durch die progressive Kennlinie oder durch ein anfängliches Spiel der Druckfeder 19 ebenfalls ein Vorteil erzielt werden, weil die anfänglich relativ geringe Gesamt-Federkraft ein nicht zu scharfes erstes Einbremsen bewirkt, bei weiterem Arbeitshub steigen dann Federkraft und Bremsdruck C stärker an.

Die Verminderung des Bremsdruckes C zum Lösen der Bremse erfolgt, gesteuert durch ansteigenden Druck L in der Hauptluftleitung und/oder abfallenden Druck A, in umgekehrte Richtung. Nahe der Ausgangsstellung öffnet das Ventil 11 für den Abschluss des Kanals KZE wieder. Das Steuerventil ist dann für ein erneutes beschleunigtes Einbremsen bereit, sobald das Leitungsteil 3 einen Bremsbeginn erkennt und den Weg für die Druckluft aus der Hauptluftleitung 6 zum Kanal KZE freigibt.

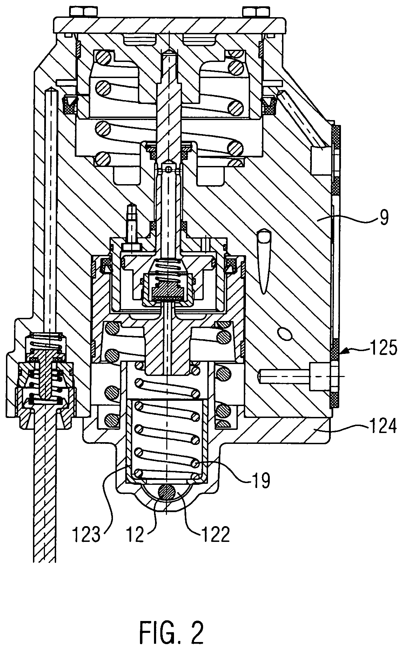

Nach Fig. 2 ist der Stellnocken 122 der Umstellmittel 12 bodenseitig außen an einem topfartigen Einsatz 123 angeordnet. Innerhalb des Einsatzes 123 ist die Druckfeder 19 teilweise untergebracht. Der topfartige Einsatz 123 ist in einer korrespondierenden Ausnehmung eines unteren Gehäusedeckels 124 eingesetzt, welcher das Gehäuse 9 verschließt.

Das Gehäuse 9 weist weiterhin eine seitliche Flanschfläche 125 zum Druckluftanschluss und zum Anbringen an den - nicht weiter dargestellten - Träger auf.

Die vorstehend genannten Merkmale können unter bestimmten Bedingungen eine vereinfachte Konstruktion, eine erhöhte Zuverlässigkeit oder eine Kompatibilität mit älteren Steuerventilbauarten bewirken. Jede der aufgezählten Variationen kann einzeln in die Basisausführung integriert werden. Darüber hinaus ist ein erfindungsgemäßes Steuerventil mit weiteren, hier nicht dargestellten Variationen kombinierbar.

### Bezugszeichenliste

- 1: Hauptteil
- 2: Träger
- 3: Leitungsteil
- 4: Bremszylinder
- 5: Vorratsluftbehälter
- 6: Hauptluftleitung
- 7: Steuerkolben
- 8: Ausgleichskolben
- 9: Gehäuse
- 10: Doppelsitzventil
101 Auslassventil
102 Ventilkörper
103 Einlassventil
104 Druckfeder
- 11: Ventil für den Abschluss des Kanals KZE
101 Ventilkörper
112 Druckfeder
113 Ventilsitz
- 12: Umschaltmittel
121 Schaltwelle
122 Stellnocken
123 topfartiger Einsatz
124 Gehäusedeckel
125 Flanschfläche
- 13: Druckfeder
- 14: Dichtung
- 15: Düse
- 16: Kolbenstange
- 17: Dichtung
- 18: Dichtung
- 19: Druckfeder
- 20: Druckfeder
- 21: Ventil
- 22: Dichtung

- A: Referenzdruck
- S: Steuerdruck
- KZE: Kanal der zusätzlichen Entlüftung
- L: Hauptluftleitung
- R: Vorratsluft
- O: Umgebung

## Patentansprüche

1. Steuerventil für selbsttätige Druckluftbremsen zur Bildung eines Bremszylinderdruckes in mindestens einem angeschlossenen Bremszylinder (4) nach Maßgabe einer Druckdifferenz zwischen einem Druck (L) in einer angeschlossenen Hauptluftleitung (6) eines Zuges und einem gespeicherten Referenzdruck (A), zumindest
bestehend aus einem Hauptteil (1) und einem Leitungsteil (2), wobei das Hauptteil (1) folgende Bauteile enthält:
einen Steuerkolben (7), der einerseits von dem Referenzdruck (A), andererseits von einem Steuerdruck (S) und mindestens einer Druckfeder (13) belastet ist, und
einen Ausgleichskolben (8), der vom Druck (C) des Bremszylinders (4) entgegen mindestens einer Druckfeder (19, 20) belastet ist, und
wobei zur Umschaltung zwischen verschiedenen Bremsdruckkennlinien die auf den Ausgleichskolben (8) wirkende Druckfeder (19) über mechanische Umstellmittel (12) vorspannbar ist,
**dadurch gekennzeichnet, dass** die Umstellmittel (12) eine im Gehäuse (9) des Hauptteils (2) drehend gelagert untergebrachte Schaltwelle (121) umfassen, die über mindestens einen Stellnocken (122) die Vorspannung der Druckfeder (19) ändert.

2. Steuerventil nach Anspruch 1,
**dadurch gekennzeichnet, dass** der Stellnocken (122) bodenseitig außen an einem topfartigen Einsatz (123) zur Anlage kommt, in dem die Druckfeder (19) zumindest teilweise untergebracht ist.

3. Steuerventil nach Anspruch 2,
**dadurch gekennzeichnet, dass** der topfartige Einsatz (123) in eine korrespondierende Ausnehmung eines unteren Gehäusedeckels (124) eingesetzt ist.

4. Steuerventil nach Anspruch 1,
**dadurch gekennzeichnet, dass** das Hauptteil (1) und das Leitungsteil (2) lösbar an einem Träger (2) befestigt ist, der Kammern und/oder Kanäle zur Druckluftführung enthält.

5. Steuerventil nach Anspruch 4,
**dadurch gekennzeichnet, dass** der Druckluftanschluss von Hauptteil (1) und Leitungsteil (2) über eine Flanschverbindung mit dem Träger (2) erfolgt.

6. Steuerventil nach Anspruch 4 oder 5,
**dadurch gekennzeichnet, dass** das Gehäuse (9) eine seitliche Flanschfläche (125) zum Druckluftanschluss und zur Anbringung an dem Träger (2) aufweist.

7. Steuerventil nach Anspruch 1,
**dadurch gekennzeichnet, dass** zum Be- und Entlüften des Bremszylinders (4) ein Doppelsitzventil (10) vorgesehen ist, bei dem durch Annäherung des Steuerkolbens (7) über eine Kolbenstange (16) ein Einlassventil (103) und durch Entfernung desselben ein Auslassventil (101) öffnet, wobei das Einlassventil (103) in einem Luftweg von einem Vorratsluftbehälter (5) in Richtung des Bremszylinders (4) liegt, und das Auslassventil (101) in einen Luftweg vom Bremszylinder (4) zur Umgebung (0) liegt.

8. Steuerventil nach Anspruch 6 und 7,
**dadurch gekennzeichnet, dass** das Doppelsitzventil (10) mit dem Steuerkolben (7), dem Ausgleichskolben (8) und dessen mindestens eine Druckfeder (19, 20) eine gemeinsame Achse bilden, die parallel beabstandet zur seitlichen Flanschfläche (125) verläuft.

9. Steuerventil nach Anspruch 6 und 7,
**dadurch gekennzeichnet, dass** die Umstellmittel in der montierten Position des Hauptteils (1) am Träger (2) unterhalb des Doppelsitzventils (10) angeordnet sind.

10. Steuerventil nach Anspruch 8,
**dadurch gekennzeichnet, dass** die gemeinsame Achse in der montierten Position des Hauptteils (1) am Träger (2) vertikal verläuft.

11. Steuerventil nach einem der vorstehenden Ansprüche,
**dadurch gekennzeichnet, dass** die Umstellmittel mit mindestens zwei Druckfedern zusammenwirken, von denen eine Druckfeder (19) eine progressive Kennlinie aufweist.

12. Steuerventil nach Anspruch 11,
**dadurch gekennzeichnet, dass** die für die Stellung "Beladen" vorgesehene Druckfeder mit Spiel im Gehäuse (9) eingebaut ist, um eine geknickte Charakteristik zu erzeugen.

## Claims

1. Control valve for automatic pneumatic brakes, for generating a brake cylinder pressure in at least one connected brake cylinder (4) in accordance with a pressure differential between a pressure (L) in a connected main brake pipe (6) of a train and a stored reference pressure (A), comprising at least a main part (1) and a pipe part (2), the main part (1) comprising the following components:
a control piston (7) loaded by the reference pressure (A) on the one hand and by a control pressure (S) and at least one compression spring (13) on the other hand, and
a balance piston (8) loaded by the pressure (C) of the brake cylinder (4) against at least one compression spring (19, 20), and
wherein the compression spring (19) acting on the balance piston (8) can be preloaded using mechanical change-over means (12) for switching between different brake pressure characteristics,
**characterised in that** the change-over means (12) comprise a selector shaft (121), which is rotatably mounted in the housing (9) of the main part (2) and changes the preload of the compression spring (19) via at least one adjusting cam (122).

2. Control valve according to claim 1,
**characterised in that** the adjusting cam (122) comes into contact at the base and externally with a pot-like insert (123), in which the compression spring (19) is at least partially accommodated.

3. Control valve according to claim 2,
**characterised in that** the pot-like insert (123) is installed into a corresponding recess of a bottom housing cover (124).

4. Control valve according to claim 1,
**characterised in that** the main part (1) and the pipe part (2) are releasably secured to a support (2), which contains chambers and/or passages for conveying compressed air.

5. Control valve according to claim 4,
**characterised in that** the compressed air connection of the main part (1) and the pipe part (2) is based on a flange connection to the support (2).

6. Control valve according to claim 4 or 5,
**characterised in that** the housing (9) has a lateral flange surface (125) for the compressed air connection and for mounting on the support (2).

7. Control valve according to claim 1,
**characterised in that** a double-seat valve (10), wherein an inlet valve (103) opens on the approach of a control piston (7) via a piston rod (16) and an outlet valve (101) opens on its removal, is provided for ventilating and venting the brake cylinder (4), the inlet valve (103) lying in an air path from an air reservoir (5) towards the brake cylinder (4) and the outlet valve (101) lying in an air path from the brake cylinder (4) to the environment (0).

8. Control valve according to claim 6 and 7,
**characterised in that** the double-seat valve (10), together with the control piston (7), the balance piston (8) and its at least one compression spring (19, 20), forms a common axis extending parallel to and at a distance from the lateral flange surface (125).

9. Control valve according to claim 6 and 7,
**characterised in that** the change-over means are located below the double-seat valve (10) if the main part (1) is mounted on the support (2).

10. Control valve according to claim 8,
**characterised in that** the common axis is vertical if the main part (1) is mounted on the support (2).

11. Control valve according to any of the preceding claims,
**characterised in that** the change-over means act together with at least two compression springs, of which one (9) has a progressive characteristic.

12. Control valve according to claim 11,
**characterised in that** the compression spring provided for the "loading" position is installed into the housing (9) with play for generating a kinked characteristic.

## Revendications

1. Soupape de commande pour des freins à air comprimé automatiques afin de former une pression de cylindre de frein dans au moins un cylindre (4) de frein raccordé, en fonction d'une différence de pression entre une pression (L) dans un conduit (6) principal raccordé pour de l'air d'un train et une pression (A) de référence mémorisée, constituée au moins d'une partie (1) principale et d'une partie (2) de conduit, la partie (1) principale comportant les éléments constitutifs suivant :
un piston (7) de commande, soumis d'une part à la pression (A) de référence, d'autre part à une pression (S) de commande et au moins à un ressort (13) de compression et
un piston (8) de compensation, qui est soumis à la pression (C) du cylindre (4) de frein, à l'encontre d'au moins un ressort (19, 20) de compression et
dans laquelle, pour commuter entre des courbes caractéristiques de pression de freinage différentes, le ressort (19) de compression, agissant sur le piston (8) de compensation, peut être précontraint à l'avance par des moyens (12) mécaniques de changement,
**caractérisée en ce que** les moyens (12) de changement comprennent un arbre (121) de manoeuvre logé, en étant monté tournant, dans le boîtier (9) de la partie (2) principale et modifiant la précontrainte du ressort (19) de compression par au moins une came (122) de réglage.

2. Soupape de commande suivant la revendication 1, **caractérisée en ce que** la came (122) vient en application, du côté du fond à l'extérieur, sur un insert (123) en forme de pot, dans lequel le ressort (19) de compression est logé au moins en partie.

3. Soupape de commande suivant la revendication 2, **caractérisée en ce que** l'insert (123) en forme de pot est inséré dans un évidement correspondant d'un couvercle (124) inférieur du boîtier.

4. Soupape de commande suivant la revendication 1 **caractérisée en ce que** la partie (1) principale et la partie (2) de conduit sont fixées de manière amovible à un support (2), qui comporte des chambres et/ou des canaux de passage de l'air comprimé.

5. Soupape de commande suivant la revendication 4, **caractérisée en ce que** le raccordement pour l'air comprimé de la partie (1) principale et de la partie (2) de conduit au support (2) s'effectue par une liaison à bride.

6. Soupape de commande suivant la revendication 4 ou 5, **caractérisée en ce que** le boîtier (9) a une surface (125) latérale de bride pour le raccordement de l'air comprimé et pour la mise sur le support (2).

7. Soupape de commande suivant la revendication 1, **caractérisée en ce que**, pour alimenter en air et pour purger le cylindre (4) de frein, est prévue une soupape (10) à double siège, dans laquelle, par rattachement du piston (7) de commande, par l'intermédiaire d'une tige (16) de piston, une soupape (103) d'admission s'ouvre et, par éloignement de celui-ci, une soupape (101) d'évacuation s'ouvre, la soupape (103) d'admission se trouvant dans un trajet de l'air allant d'un réservoir (5) d'air en direction du cylindre (4) de frein et la soupape (101) d'évacuation se trouvant dans un trajet d'air allant du cylindre (4) de frein à l'extérieur (0).

8. Soupape de commande suivant la revendication 6 ou 7, **caractérisée en ce que** la soupape (10) à double siège, avec le piston (7) de commande, le piston (8) de compensation et son au moins un ressort (19, 20) de compression, forment un axe commun, qui s'étend parallèlement à distance de la surface (125) latérale de bride.

9. Soupape de commande suivant la revendication 6 et 7, **caractérisée en ce que** les moyens de changement sont disposés dans la position montée de la partie (1) principale sur le support (2) en dessous de la soupape (10) à double siège.

10. Soupape de commande suivant la revendication 8, **caractérisée en ce que**, dans la position montée de la partie (1) principale sur le support (2), l'axe commun s'étend verticalement.

11. Soupape de commande suivant l'une des revendications précédentes,
caratérisée en ce que les moyens de changement coopèrent avec au moins deux ressorts de compression, dont l'un (19) a une courbe caractéristique progressive.

12. Soupape de commande suivant la revendication 11, **caractérisée en ce que** le ressort de compression prévu pour la position « chargée » est inséré avec jeu dans le boîtier (9) pour produire une caractéristique coudée.
